(19) Europäisches Patentamt
European Patent Office
Office européen des brevets

(11) **EP 3 969 945 B1**

(12) **FASCICULE DE BREVET EUROPEEN**

(45) Date de publication et mention de la délivrance du brevet:
**08.03.2023 Bulletin 2023/10**

(21) Numéro de dépôt: **20731926.0**

(22) Date de dépôt: **04.05.2020**

(51) Classification Internationale des Brevets (IPC):
**G01W 1/10** (2006.01)  **G01W 1/14** (2006.01)
**G01W 1/00** (2006.01)

(52) Classification Coopérative des Brevets (CPC):
**G01W 1/14; G01W 1/10;** G01W 2001/006

(86) Numéro de dépôt international:
**PCT/FR2020/050742**

(87) Numéro de publication internationale:
**WO 2020/229753 (19.11.2020 Gazette 2020/47)**

(54) **PROCÉDÉ ET DISPOSITIF DE MESURE DE PRÉCIPITATIONS**

VERFAHREN UND VORRICHTUNG ZUR PRÄZIPITATMESSUNG

PRECIPITATION MEASUREMENT METHOD AND DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.05.2019 FR 1905057**

(43) Date de publication de la demande:
**23.03.2022 Bulletin 2022/12**

(73) Titulaire: **HD Rain**
**94380 Bonneuil-sur-Marne (FR)**

(72) Inventeurs:
 • HALLALI, Ruben
  75005 PARIS (FR)
 • RATNAYAKE, Dumminda
  31170 COLOMIERS (FR)
 • MERCIER, François
  94700 MAISONS-ALFORT (FR)

(74) Mandataire: **IP Trust**
**2, rue de Clichy**
**75009 Paris (FR)**

(56) Documents cités:
 • L Barthès ET AL: "Rainfall measurement from the opportunistic use of an Earth-space link in the Ku band", Atmospheric Measurement Techniques, 29 août 2013 (2013-08-29), pages 2181-2193, XP055651290, DOI: 10.5194/amt-6-2181-2013 Extrait de l'Internet: URL:https://www.atmos-meas-tech.net/6/2181 /2013/amt-6-2181-2013.pdf [extrait le 2019-12-10] cité dans la demande
 • François Mercier: "Assimilation variationnelle d'observations multi-échelles: Application à la fusion de données hétérogènes pour l'étude de la dynamique micro et macrophysique des systèmes précipitants", Extrait de l'internet: https://tel.archives-ouvertes.fr/tel-01466 267/document XP055650717 cité dans la demande
 • FRANÇOIS MERCIER ET AL: "Estimation of Finescale Rainfall Fields Using Broadcast TV Satellite Links and a 4DVAR Assimilation Method", JOURNAL OF ATMOSPHERIC AND OCEANIC TECHNOLOGY, vol. 32, no. 10, 1 octobre 2015 (2015-10-01), pages 1709-1728, XP055650739, US ISSN: 0739-0572, DOI: 10.1175/JTECH-D-14-00125.1 cité dans la demande

**(Cont. page suivante)**

• MERCIER FRANÇOIS ET AL: "HD Rain", RADARS : TECHNOLOGIES, MÉTHODOLOGIES ET APPLICATIONS, R-TMA-2018, VERSAILLES, SAINT-QUENTIN-EN-YVELINES, GUYANCOURT (FR), [Online] 11 December 2018 (2018-12-11), pages 33-33, XP055953044, France Retrieved from the Internet: URL:https://r-tma-2018.sciencesconf.org/data/pages/book_r_tma_2018_fr_20181211.pdf> [retrieved on 2022-08-19]

## Description

## Domaine de l'invention

La présente invention concerne l'évaluation qualitative et quantitative des précipitations, et leur distribution temporelle et géographique. La pluviométrie peut actuellement être déterminée à l'aide de différents instruments, par exemple des pluviomètres disposés au sol et collectant la pluie dans des récipients calibrés, ou encore des radars météorologiques mesurant le taux de précipitations par effet de rétro-diffusion.

On a aussi proposé d'exploiter l'incidence des précipitations sur la propagation des transmissions radiofréquences, les micro-ondes (1 GHz à 300 GHz) étant en partie absorbées par l'eau, et plus particulièrement par l'eau liquide ou solide des précipitations. Cette technique, basée sur la théorie de la diffusion de Mie, permet de déduire des informations d'intérêt météorologique à partir de la mesure de l'absorption d'une partie d'un signal radio circulant dans l'atmosphère.

En particulier, on a proposé d'exploiter les signaux diffusés par les nombreux satellites géostationnaires destinés aux réseaux TV-SAT et émettant dans la bande de fréquence Ku (10,7 GHz à 12,75 GHz), où le signal est sensiblement affaibli par les précipitations, typiquement 2dB par kilomètre pour de fortes précipitations (50mm par heure).

Il est aussi observé qu'en l'absence d'émetteur intentionnel dans la visée d'un capteur électromagnétique, notamment de type satellite, les gouttes de pluies et autres hydrométéores émettent eux-mêmes du fait du rayonnement de Planck, mais aussi de la diffusion de Mie de l'ensemble des signaux entrant en contact avec les hydrométéores observés.

Ces émissions peuvent être également utilisées afin de détecter et quantifier les hydrométéores dans la visée du capteur utilisé.

## Etat de la technique

On connaît dans l'état de la technique l'article « Rainfall measurement from the opportunistic use of an Earth-space link in the Ku band » auteurs Barthès, L. and Mallet, C. dans la revue Atmos. Meas. Tech. , 6, 2181-2193, https://doi.org/10.5194/amt-6-2181-2013, 2013. Cet article porte sur le développement d'un appareil hyperfréquence à faible coût consacré à la mesure des taux de pluie moyens observés le long des liaisons Terre-satellite, ce dernier étant caractérisé par une longueur de trajet troposphérique de quelques kilomètres. Les mesures de puissance au sol, qui sont effectuées à l'aide des transmissions de télévision en bande Ku de plusieurs satellites géostationnaires différents, sont basées sur le principe que l'atténuation atmosphérique produite par la pluie rencontrée le long de chaque trajet de transmission peut être utilisée pour déterminer la pluie moyenne sur le trajet taux. Ce type d'appareil pourrait être très utile dans les zones vallonnées où les données radar ne sont pas disponibles ou dans les zones urbaines où ces appareils pourraient être placés directement dans les maisons en utilisant une antenne de télévision résidentielle.

Cet article expose la principale difficulté rencontrée avec cette technique qui est de retrouver les caractéristiques des précipitations en présence de nombreuses autres causes de fluctuation du signal reçu, produites par la scintillation atmosphérique, les variations de la composition atmosphérique (concentration en vapeur d'eau, teneur en eau des nuages) ou les paramètres de transmission par satellite (variations de puissance émise, pointage satellite).

Cet article décrit un algorithme basé sur un réseau neuronal artificiel, utilisé pour identifier les périodes sèches et pluvieuses et pour modéliser la variabilité du signal reçu résultant d'effets non liés à la pluie. Il expose que lorsque l'altitude de la couche de pluie est prise en compte, l'atténuation de la pluie peut être inversée pour obtenir le taux de pluie moyen sur le trajet. Il propose de comparer les taux de précipitations obtenus à partir de ce processus aux pluviomètres colocalisés et aux mesures radar prises pendant toute la durée de la campagne, et les événements pluviométriques les plus importants sont analysés.

On connaît aussi les publications suivantes de l'inventeur :

- La thèse de doctorat « Assimilation variationnelle d'observations multi-échelles : Application à la fusion de données hétérogènes pour l'étude de la dynamique micro et macrophysique des systèmes précipitants » soutenue le 05-07-2016 à l'Université Paris-Saclay. Ce document de l'art antérieur décrit une solution basée sur l'assimilation de données afin de coupler des observations hétérogènes des précipitations et des modèles, pour étudier les précipitations et leur variabilité spatio-temporelle à différentes échelles (macrophysique, qui s'intéresse aux cellules de pluie, et microphysique, qui s'intéresse à la distribution en taille des gouttes - DSD - qui les composent). Tout d'abord, nous développons un algorithme permettant de restituer des cartes de précipitations à partir de mesures de l'atténuation causée par la pluie à des ondes provenant de satellites de télévision. Nos restitutions sont validées par rapport à des données radar et pluviomètres sur un cas d'étude dans le sud de la France. Ensuite, nous restituons, toujours par assimilation de données, des profils verticaux de DSD et de vents verticaux à partir de mesures de flux de gouttes au sol (par disdromètres) et de spectres Doppler en altitude (par radar).

- François Mercier, Laurent Barthès, Cécile Mallet. Estimation of Finescale Rainfall Fields Using Broadcast TV Satellite Links and a 4DVAR Assimilation Method. Journal of Atmospheric and Oceanic Technology, American Meteorological Society, 2015, 32 (10), pp.1709-1728. (10.1175/JTECH-D-14-00125.1). (insu-01157488). Cette étude propose une méthode basée sur l'utilisation d'un ensemble de liaisons hyperfréquences commerciales satellite-Terre pour reconstruire les champs de précipitations en fin d'échelle. De telles liaisons hyperfréquences existent partout dans le monde et peuvent être utilisées pour estimer l'atténuation de la pluie intégrée sur les 5 à 7 premiers kilomètres des liaisons avec une résolution temporelle très élevée (10 s dans le cas présent). L'algorithme de récupération utilise une méthode d'assimilation de données variationnelles à quatre dimensions (4DVAR) impliquant un schéma d'advection numérique. La vitesse d'advection est récupérée à partir des observations ou des champs de précipitations radar à des pas de temps successifs. Cette technique a été successivement appliquée à des cartes de pluie 2D simulées et à des données réelles enregistrées à l'automne 2013 lors du cycle hydrologique de l'expérience méditerranéenne (HyMeX), avec un capteur recevant les signaux micro-ondes de quatre satellites différents. Les performances de ce système sont évaluées et comparées à un radar Météo-France opérationnel et à un réseau de 10 pluviomètres. En raison des limites du modèle de propagation, cette étude se limite aux événements à fortes caractéristiques advectives (quatre événements enregistrés sur huit). Pour ces événements (uniquement), la méthode produit des champs de précipitations fortement corrélés avec les cartes radar à des résolutions spatiales supérieures à. Les résultats d'échelle ponctuelle sont également satisfaisants pour des résolutions temporelles supérieures à 10 min (corrélation moyenne avec des données pluviométriques égales à environ 0,8, similaire à la corrélation entre les données radar et pluviométriques).

- François Mercier, Ruben Hallali, Duminda Ratnayake, Laurent Barthes, Cécile Mallet: "HD Rain", article présenté à l'occasion de la conférence Radars: Technologies, Méthodologies et Applications (R-TMA-2018) qui s'est tenue à Versailles/Saint-Quentin-en-Yvelines/Guyancourt les lundi 10 et mardi 11 décembre 2018. Le principe de la pluie présenté dans ce document de l'art antérieur consiste à utiliser de manière opportuniste les signaux de télévision provenant de satellites géostationnaires émettant en bande de fréquence Ku. A cette fréquence, ces signaux sont atténués (notamment) par la pluie. La société HD Rain, titulaire de la présente demande, a développé des boîtiers électroniques (capteurs) capables notamment de mesurer l'atténuation subie par le signal provenant de tels satellites. Ces capteurs sont connectés derrière des antennes commerciales de réception satellitaire (paraboles). Un premier algorithme est appliqué pour extraire la part de l'atténuation due à la pluie et ainsi remonter - via des relations classiques de la littérature sur le sujet - au taux de pluie moyen sur la liaison sol - satellite dans la couche de pluie. Il s'agit ensuite de déployer un réseau de tels capteurs sur une zone à couvrir. Ensuite un second algorithme d'assimilation de données permet de combiner les mesures effectuées par ces capteurs et de produire des cartes de la pluie tombant sur la zone. Un algorithme classique (dit de nowcasting) est ensuite appliqué pour effectuer des prévisions de pluie à 1 ou 2h dans la direction du vent. A ce jour deux systèmes ont été déployés, un à Toulouse (France) et le deuxième à Manaus (Brésil). Quelques résultats et comparaisons avec d'autres types de mesure (radar, pluviomètre) sont présentés.

**Inconvénients de l'art antérieur**

Les solutions de l'art antérieur ne sont pas satisfaisantes car elles sont très sensibles aux conditions de propagation variant pour de multiples raisons, et pas seulement en raison de la présence de pluie. En réalité, l'atténuation varie au cours de la journée, parfois de manière erratique, et l'évaluation résultant du procédé proposé par cette demande est donc largement faussée par ces variations.

La solution proposée dans l'article « Rainfall measurement from the opportunistic use of an Earth-space link in the Ku band » propose une solution destinée à fournir une information de pluviométrie sur la base des données collectées pendant une période déterminée, au cours de laquelle des variations significatives ont pu intervenir. Il ne fournit donc qu'une information statique et figée, ne prenant pas en compte l'évolution de la pluviométrie dans le temps.

Par ailleurs, les solutions de l'art antérieur ne sont pas satisfaisantes car elles ne prennent pas en compte le délai de la chute des gouttes d'eau (ou autres hydrométéores) ainsi que leur déplacement horizontal pendant cette chute. Avoir des informations sur la vitesse de déplacement des cellules pluvieuses est aussi crucial, tant pour évaluer le déplacement des gouttes que pour relier des mesures réalisées à des dates / lieux différents.

De plus, ces solutions ne sont pas adaptées à un déploiement réel sur le terrain car elles nécessitent l'installation d'une parabole en extérieur afin d'être en mesure de réceptionner les signaux satellite et d'accéder ensuite à une alimentation en énergie et à un réseau de communication fiable, éléments situés dans la majorité des cas à l'intérieur du bâtiment. Ce passage de l'extérieur vers l'intérieur du bâtiment, sans compromettre l'étanchéité de sa toiture, conduit à éliminer de nombreux sites d'installation potentiels.

Enfin, de par la nécessité de viser un satellite émettant correctement sur la zone d'intérêt les solutions existantes ne permettent pas d'orienter la mesure dans toutes les directions depuis le site d'acquisition, mais la contraint en direction d'un sous-ensemble de l'orbite des satellites géostationnaires.

## Solution apportée par l'invention

Afin de répondre à ces inconvénients, la présente invention concerne selon son acception la plus générale un procédé de mesure des précipitations présentant les caractéristiques énoncées dans la revendication 1.

Le procédé consiste :

- à acquérir depuis au moins un site d'acquisition PA de coordonnées (x,y,z) au moins un signal radio transmis depuis au moins un émetteur, ledit signal radio étant constitué par le signal émis par les gouttes de pluie et autres hydrométéores, et à mesurer périodiquement la puissance P(t) d'une composante du signal reçu afin de créer des séries de niveaux horodatés (P(t),t).

- à procéder à un traitement sur au moins une fenêtre temporelle glissante de N valeurs d'au moins une série horodatée (P(t),t), combinée à d'autres séries temporelles (Mp(t),t) de paramètres environnementaux au niveau ou à proximité du site d'acquisition (température, pression, humidité, vent, ...) ou bien de paramètres relatifs au système (températures parabole & LNB, tension d'alimentation, ...), consistant d'une part à déterminer le type d'hydrométéores en jeu (pluie, grêle, neige, etc.) et d'autre part à déterminer un niveau de référence pour le signal correspondant à la puissance du signal qui serait reçue de l'émetteur en l'absence d'hydrométéores et noté (Pref(t),t).

- à calculer en temps réel une séquence de fluctuations d'origine pluviométrique (ou dues à d'autres hydrométéores) de la puissance (ΔP(t),t) selon :

$$\Delta P(t) = P(t) - Pref(t)$$

L'avantage d'un tel traitement est qu'il permet une détermination en temps réel, dynamique, du niveau de référence Pref(t).

Ce niveau de référence pourra être déterminé simultanément ou non à l'identification des hydrométéores mis en jeu en exécutant un traitement consistant :

- à déterminer les dates de début ou de fin de période avec précipitations en fonction de la variance, de la vitesse de variations et d'une manière générale de la signature desdites valeurs (P(t),t). Par exemple, ladite signature pourra être calculée à partir de la valeur efficace d'un filtrage numérique desdites valeurs (P(t),t) sur une bande définie de fréquences basses.

- à déterminer Pref(t) selon les cas suivants :

  ∘ entre les instants de début tdj et de fin tfj de périodes avec précipitations, Pref(t) correspondant à une interpolation entre (P(tdj),tdj) et (P(tfj),tfj)
  ∘ entre les instants de fin de précipitations tfj et de début de précipitations suivante tdj+1 :

$$Pref(t) = P(t)$$

  ∘ après un début de précipitations tdj dont la fin correspondante n'a pas encore été détectée :

$$Pref(t) = P(tdj))$$

Avantageusement, cette étape de détermination est réalisée par un réseau de neurones.

Ce niveau de référence pourra selon une autre variante être déterminé simultanément ou non à l'identification des hydrométéores mis en jeu directement à partir des mesures P(t), de la mesure d'autres paramètres environnementaux à proximité du site d'acquisition (par exemple la température ou l'humidité de l'air, ou la température de l'antenne) et de la prise en compte de paramètres relatifs au système (températures des éléments du capteur, tension d'alimentation, ...), avantageusement en utilisant un réseau de neurones supervisé et donc entraîné face à des données de référence (radar, pluviomètres).

De préférence et dans le cas de la pluie, on procède en outre aux étapes suivantes :

- acquisition de l'altitude Zo de l'isotherme 0°C

- calcul de Lo, la distance traversée par le signal en dessous de l'isotherme 0°C, en fonction de l'altitude Zo et de la géométrie du problème - détermination du taux de pluie

$$R(t)_i = \sqrt[b]{\frac{k.|\Delta P(t)_i|}{Lo}}$$

où:

- R désigne le taux de pluie en millimètres par heure
- Lo désigne la distance traversée par le signal en dessous de l'isotherme 0°C
- ΔP(t) désigne la fluctuation de la puissance reçue en décibels
- b et k désignent des coefficients dépendant majoritairement de la fréquence, de la polarisation du signal radiofréquence et de la distribution en taille des gouttes.

D'autres paramètres liés à la géométrie du problème (angle d'incidence de l'onde sur les gouttes par exemple) et de paramètres environnementaux (température de l'eau par exemple) sont également susceptibles de les influencer dans une moindre mesure. Dans le cadre de cette demande, la réalisation de mesures à plusieurs fréquences et sous plusieurs polarisations permettra d'avantageusement ajuster les restitutions de taux de pluie R. Les mesures multi-polarisations permettent en outre la restitution des tailles caractéristiques des gouttes de pluie en identifiant les composantes verticales et horizontales de l'atténuation, la forme des gouttes étant fonction de leur taille.

La question de l'émetteur du signal radio est également d'importance. L'émetteur peut ainsi être, dans un mode de réalisation avantageux, un satellite géostationnaire d'émission TV ou internet, en bande de fréquence Ku, Ka ou V. Dans ce cas la fluctuation de puissance due aux hydrométéores et mesurée par le système correspond à la perte de signal entre l'émetteur et l'antenne de réception. Nous avons vu que l'émetteur pouvait néanmoins également être constitué, conformément à l'invention revendiquée, par les gouttes de pluie elles-mêmes, dans le cas où la station d'acquisition ne vise pas un satellite mais, par exemple, le ciel vide. Par rayonnement de Planck, les gouttes émettent en effet un signal maximal dans l'infrarouge mais également un signal plus faible dans les radiofréquences. La diffusion de Mie des signaux électromagnétiques entrant en collision avec les hydrométéores dans l'angle de visée de l'antenne produit également un signal en direction de l'antenne. En bande Ku par exemple, ce signal focalisé par une antenne est mesurable (mesure de type radiométrique). Dans ce cas-là la pluie provoque donc une augmentation de la puissance du signal reçu. En inversant ce signal (soit P(t)=-Preçu(t)), nous nous trouvons dans le même cas de figure qu'avec un émetteur « artificiel » comme un satellite.

L'invention concerne aussi les applications du procédé susvisé, notamment pour la restitution de cartes de précipitations au sol (étape 140).

Pour cela, les pluviométries moyennes R(t) fournies par le procédé susvisé sont projetées sur le sol en fonction de l'altitude Zo et du couple vitesse/trajectoire de chute des gouttes. La bonne détermination des conditions de chute des gouttes de pluie, sera avantageusement déduite d'informations sur le vent local, informations calculées.

Ce procédé est répété pour chaque dispositif d'acquisition STATION$_i$ et caractérisé en ce que l'on détermine les projections au sol du taux de pluie Rx,y,z (t) en fonction :

- desdites valeur d'atténuation ($\Delta$P(t),t)$_i$ correspondant auxdits dispositifs STATION$_i$,
- de la longueur Lo$_i$(t) du segment de la liaison STATION$_i$-émetteur E$_i$ compris entre le sol et l'altitude Zo(t) de l'isotherme 0°C.

Selon une variante, ladite étape de détermination des projections au sol du taux de pluie Rx,y,z(t) est en outre fonction du temps, de la direction de la vitesse et de la trajectoire de chute des gouttes dans le volume comprenant les positions desdits dispositifs.

L'invention concerne ensuite aussi l'exploitation de ce procédé pour la réalisation d'une carte des précipitations (étape 140) consistant à déterminer, à partir d'une pluralité de dispositifs d'acquisition STATION$_i$, les données d'intensités pluviométriques au sol.

Avantageusement, ladite étape de détermination des cartes de précipitations au sol est en outre fonction d'un modèle représentatif de l'état de l'atmosphère A(t), sur le volume comprenant les positions desdits dispositifs d'acquisition STATION$_i$ et l'application d'un traitement d'assimilation de données.

Avantageusement, ladite étape de détermination des cartes de précipitations au sol peut intégrer, outre des mesures de pluviométrie réalisées selon le procédé décrit ci-avant, des données de pluviométrie mesurées par d'autres instruments (par exemple pluviomètres, radars météorologiques, satellites météorologiques, données opportunistes déduites par exemple d'images webcam). L'application d'un traitement d'assimilation de données est particulièrement bien adaptée à un tel procédé de fusion de données de différentes natures.

Avantageusement, un ou plusieurs calculateurs de type serveur commande les traitements consistant à :

- estimer la vitesse de déplacement des cellules de pluie par une estimation directe à partir des données temporelles $\Delta$P(t)i de fluctuations de puissance reçue, calculées à partir des données P(t)i mesurées par les différentes stations de mesure PA$_i$ géolocalisée (x, y, z)$_i$ et enregistrées par les différents capteurs
- calculer une projection sur le sol des mesures de pluviométrie réalisées par chaque station de mesure PA$_i$, en tenant compte de la position du capteur, de l'altitude Zo de l'isotherme 0°, de la vitesse de chute des gouttes de pluie, et de la vitesse de déplacement des cellules pluvieuses.
- procéder périodiquement à une fréquence 1/Tf à une reconstitution de la carte de pluie au sol par une étape de fusion des mesures réalisées par un nombre significatifs de stations de mesure STATION$_i$, sur une période [t-T:t] (avec T>Tf) pour produire une carte de la pluie au sol sur la zone autour des capteurs sur la période [t-Tf:t].

Selon un mode de réalisation avantageux, ladite estimation de la vitesse de déplacement des cellules de pluie consiste à estimer pour chaque paire de stations de mesure (STATION$_i$;STATION$_j$) le délai ("lag") entre les dates de début de la pluie sur chacun des capteurs, puis à déduire par triangulation le déplacement des cellules de précipitation à partir des délais pour toutes les paires de stations de mesure.

Selon une variante, ladite estimation de la vitesse de déplacement des cellules de pluie est réalisée à partir d'images satellitaires des masses nuageuses.

Selon une autre variante, ladite estimation de la vitesse de déplacement des cellules de pluie consiste en une modélisation du vent en altitude par des modèles météorologiques.

Selon une dernière variante, ladite estimation est réalisée par la fusion d'au moins 2 des 3 méthodes précédentes.

L'invention concerne aussi un module d'acquisition pour la mise en œuvre du procédé susvisé caractérisé en ce qu'il comprend une entrée pour recevoir le signal provenant d'une antenne de réception radio-fréquence, d'un éventuel composant potentiellement commandable sélectionnant une partie du signal utile en le transposant potentiellement vers une bande de fréquence plus basse, un circuit électronique pour la mesure du niveau du signal d'entrée et du calcul d'une valeur numérique représentative dudit niveau et des moyens de communication pour la télédistribution de messages numériques comprenant un ou plusieurs éléments relatifs à la mesure et aux éléments locaux.

Selon une variante, le module comprend une batterie électrique et un panneau photovoltaïque.

Selon une autre variante, le module comprend un moyen de communication de type radiofréquence.

Selon une autre variante, il comprend un circuit de mise en veille dudit moyen de communication radiofréquence et/ou d'un ralentissement de la périodicité des mesures, commandé par un signal représentatif de la présence de pluie dans la visée de ladite station et/ou de l'état de la station à court et moyen termes, notamment en fonction de la quantité d'énergie actuellement présente dans les batteries ainsi que l'ensoleillement prévu.

De préférence, le module comporte un moyen de commande de la variation périodique de la polarisation du récepteur, ou d'écoute simultanée, afin d'obtenir des informations sur la forme et la taille des gouttes.

Selon une autre variante, le dispositif comprend un moyen de commande de la variation périodique de la polarisation et/ou de la bande de fréquence de la tête LNB, ou de son équivalent, afin de mesurer les différentes composantes du signal reçu.

Selon un mode de réalisation particulier, il comprend aussi un moyen de protection thermique (12) dans le but de minimiser les variations de température du système, notamment de la tête LNB et/ou des batteries.

Selon une dernière variante, il possède au moins un capteur, notamment de température, fournissant au calculateur des paramètres locaux dans le but d'éliminer les contributions non-désirées dans la mesure du signal.

Les effets techniques nouveaux de l'invention portent notamment sur les aspects suivants :

1- l'autonomie de la station en énergie et en réseau de communication, notamment la mise en veille périodique du récepteur pour économiser l'énergie : cette solution permet de résoudre les difficultés d'installation (passage de câble, longueur de câble) et de procéder à des installations en pleine nature.

2- l'exécution potentielle d'un moyen local de détection de la pluie (réseau de neurones local, ...) dans le but de ne pas transmettre inutilement de données en continu si les ressources de connectivité sont limitées.

3- l'utilisation de plusieurs polarisations et fréquences (par exemple parties haute et basse d'une bande de diffusion) afin d'obtenir des informations sur la forme des hydrométéores, qui permet de déduire des informations sur leur taille (pour l'agriculture par exemple, problèmes de splashing) et d'améliorer les relations atténuation - pluviométrie ainsi que le calcul du temps de chute des hydrométéores.

4- la prise en compte du temps de chute de la pluie et/ou de son déplacement pendant la chute qui permet la prise en compte de la géométrie du problème et la restitution plus fiable de cartes de pluie au sol.

5- la protection des éléments et la correction de la mesure relativement à la température mesurée localement ou déterminée extérieurement (et potentiellement d'autres données) afin d'éliminer les contributions non-désirées sur la mesure de la puissance.

6- la détermination de la vitesse de déplacement des cellules de précipitations par fusion de données multi-sources.

**Description détaillée d'un exemple non limitatif de l'invention**

La présente invention sera mieux comprise à la lecture de la description détaillée d'un exemple non limitatif de l'invention qui suit, se référant aux dessins annexés où :

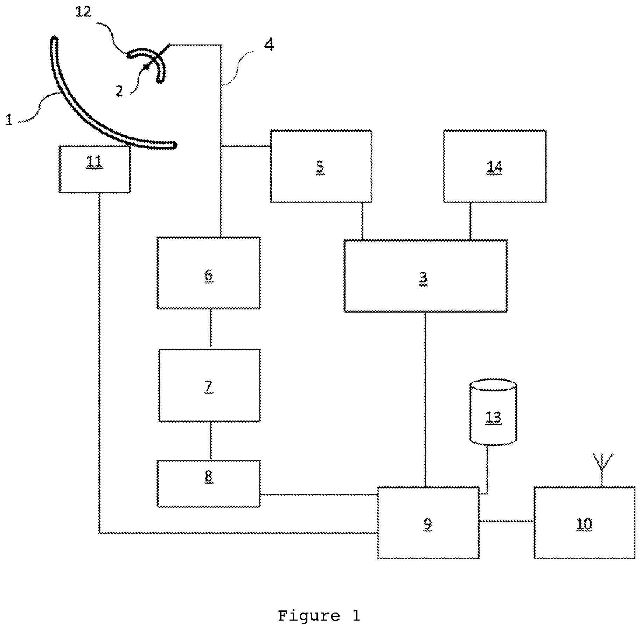

- la figure 1 représente une vue schématique d'un dispositif selon l'invention
- la figure 2 représente le logigramme du procédé de mesure et de cartographie selon l'invention.

1. Station de mesure

Une station de mesure est constituée d'une parabole (1), d'une tête universelle de réception satellite (LNB) (2), de capteurs locaux et enfin d'un boitier électronique. Ce dernier permet d'obtenir une image numérique de la puissance du signal et/ou de sa fluctuation majoritairement due à la pluie, et de transmettre ces données au(x) serveur(s) de concentration des données.

La présente invention est mise en oeuvre selon un mode de réalisation avantageux avec une solution opportuniste consistant à exploiter les émissions dans les bandes de télédiffusion en bande Ku, Ka ou V émises par plusieurs centaines de satellites géostationnaires actuellement déployés.

Chaque station de mesure comprend un dispositif d'acquisition STATION$_i$ constitué d'une parabole (1) de type usuelle équipée d'une tête de réception satellite universelle (2) ci-après tête LNB. Les têtes LNB peuvent présenter deux sorties indépendantes (ou plus) pour alimenter plusieurs terminaux numériques de façon indépendante.

Une alimentation (3) reliée à l'installation électrique locale alimente la tête LNB (2) par l'intermédiaire du câble coaxial unique de descente (4), via un filtre passe-bas, en l'occurrence une self (5).

Le signal reçu est transmis à un circuit de prétraitement (6) qui réalise une préamplification et un filtrage dans le but d'éliminer les signaux parasites, les composantes continue et basses fréquences, mais aussi de sélectionner une fréquence, ou un ensemble de fréquences particuliers.

Le signal ainsi filtré est ensuite converti en une tension image de sa puissance au moyen du détecteur logarithmique (7), valeur ensuite numérisée par un convertisseur analogique/numérique (8) piloté par un microcontrôleur (9).

Le microcontrôleur reçoit les signaux numérisés selon le protocole I2C et calcule une valeur numérique représentative du niveau de la composante choisie du signal sur une période déterminée, pour préparer un message numérique comportant les informations relatives à la mesure et aux paramètres locaux, qui est transmis à l'unité de télécommunication (10), par exemple un circuit wifi ou Ethernet. La périodicité de l'émission de ce circuit (10) est commandée par le microcontrôleur (9).

Les messages transmis peuvent contenir :

- la valeur numérique image de la puissance
- un identifiant IDi dudit dispositif d'acquisition STATION$_i$
- la position instantanée de la STATION$_i$
- les informations sur les composantes mesurées des signaux
- les informations sur le ou les émetteurs écoutés
- des informations relatives aux conditions de météorologie locales (températures, hygrométrie, ensoleillement ...)
- des informations relatives aux résultats de calculs menés localement, ...

Selon une variante, le microcontrôleur (9) commande également l'alimentation (3) afin de sélectionner la composante du signal à mesurer. Ce contrôle consiste à activer de manière fixe ou séquentielle les modes de la tête LNB (13V, 18V, avec ou sans tonalité à 22 KHz).

Dans ce cas, le niveau de signal mesuré est associé à un indicateur du mode actif. Ce contrôle séquentiel permet de réaliser des mesures dans plusieurs bandes de fréquence et selon deux polarisations, horizontale et verticale. La combinaison des mesures ainsi réalisées permet d'obtenir des informations sur la taille (ou le volume) caractéristique des hydrométéores (étape 200), ce qui est une information pertinente en elle-même (pour des questions d'impact sur les cultures par exemple) et permettra en outre par la suite d'affiner la détermination du type d'hydrométéore en jeu (pluie, neige, grêle, etc.), et, le cas échéant, des taux de pluie et leurs projections au sol.

Les informations du message numérique télédiffusé par le circuit (10) peuvent aussi comprendre d'autres paramètres calculés ou mesurés localement par un jeu de capteurs (11) situé dans l'environnement immédiat de la station comme par exemple la température de la tête LNB (2) mesurée par un capteur thermique positionné sur cette dernière.

Selon une variante particulière, le dispositif peut aussi comporter un module de géolocalisation (un des éléments du jeu de capteurs (11)), par exemple GPS, activable par un serveur distant et le récepteur du module de télécommunication (10), ou bien diffusé périodiquement à fréquence faible par la station, pour permettre la géolocalisation des dispositifs sur le terrain par le serveur. L'activation distante de ce module consiste alors à commander via le microcontrôleur (9) l'émission d'un message comprenant les coordonnées fournies par le module GPS, message éventuellement partagé avec d'autres informations.

Le microcontrôleur (9) peut aussi commander la mise en veille ou l'extinction de certaines fonctions, notamment l'alimentation de la tête LNB (2), le module de télédiffusion (10) afin de réduire la consommation électrique de manière conditionnelle, par exemple lorsqu'un message transmis par un serveur commande le passage en mode de veille, lorsqu'un calcul local (réalisé par exemple par le réseau de neurones local, s'il existe) sur les mesures ou lorsqu'un capteur d'hygrométrie ou de luminosité du jeu de capteurs (11) indique une absence de précipitation, ou encore en fonction de l'historique des précipitations, conduisant alors à une adaptation de la fréquence de passage en mode actif et de la longueur des périodes de veille.

Selon une variante, les circuits électroniques sont intégrés dans un ou plusieurs boîtiers thermorégulés avec, par exemple, un matériau à changement de phase présentant un point de fusion compris entre 15°C et 40°C.

Selon une dernière variante, la protection du système est un ou plusieurs capots pare-soleil étanches aux précipitations et/ou équipée d'isolant thermique.

2 - Station de mesure sans émetteur artificiel

Dans un mode de réalisation selon l'invention telle que revendiquée, la station de mesure ne capte pas les émissions provenant d'une source « artificielle » visée (satellite, antenne relai télécom, etc.) mais le signal émis par les gouttes de pluie elles-mêmes.

Ledit signal peut être dû au rayonnement de Planck (rayonnement du corps noir), les gouttes émettent en effet sur tout le spectre électromagnétique, avec un signal de puissance maximale dans l'infrarouge mais également un signal plus faible dans les radiofréquences. En bande Ku par exemple, ce signal focalisé par une antenne est mesurable (mesure de type radiométrique).

Ledit signal peut également être dû à la diffusion de Mie sur les hydrométéores présents dans la zone visée par le capteur, lorsque ceux-ci sont atteints par tout signal électromagnétique traversant ladite zone.

Dans ce cas, la station d'acquisition (en l'occurrence une parabole) ne vise pas un satellite mais le ciel vide. En l'absence de pluie, la mesure de puissance « brute » Preçu(t) est constituée d'un bruit, atmosphérique ou électronique. La pluie provoque alors une augmentation de la puissance du signal reçu. En inversant ce signal (soit P(t)=-Preçu(t)), nous nous trouvons finalement dans le même cas de figure qu'avec un émetteur « artificiel » comme un satellite.

Tous les autres points visés par la présente invention (station de mesure et chaînes de traitement) sont ainsi similairement applicables dans ce cadre.

### 3. Alternative : Station de mesure autonome

Dans une des variantes préférées de l'invention, la station de mesure présente une autonomie en énergie grâce à l'adjonction d'un système photovoltaïque (14) et d'une autonomie en communication grâce à la connexion à un ou plusieurs réseaux de communication sans fil (2G, 3G, 4G, 5G, LTE/M, LORA, SIGFOX, satellite, ...).

Les informations des messages transmis par l'unité de communication (10) peuvent également être conservées localement dans une base de données (13) afin d'être récupérées ultérieurement en cas d'éventuels problèmes de communication ou bien manuellement en l'absence de réseau de communication abordable sur le lieu desservi.

Cette autonomie simplifie le déploiement des stations sur le terrain en réduisant les contraintes des sites de déploiement, notamment le passage de câble à l'intérieur du bâtiment sans toucher à l'étanchéité du bâtiment et en donnant une unité de lieu à l'installation.

Cela permet également d'améliorer la qualité de la mesure en réduisant la longueur du câble transportant le signal issu de la tête LNB (2). Elle peut aussi être installée en pleine nature, dans des lieux ne disposant d'aucun accès électrique ni de réseau câblé de communication. Le dispositif est autonome en électricité, l'alimentation (3) étant constituée par une batterie ou un supercondensateur relié à une source d'énergie renouvelable (14), par exemple un panneau photovoltaïque ou une éolienne. Cette variante permet d'équiper des territoires non desservis par un réseau électrique.

La station de mesure autonome comporte aussi un processeur (9) réalisant des traitements d'estimation des précipitations afin de commander l'alimentation (3) et la transmission des données en fonction de l'état des précipitations (typiquement alimentation plus rare et pas de transmission si pas de précipitations sur une longue période).

Le procédé d'estimation des précipitations peut notamment être celui décrit ci-après, mais il peut aussi être réalisé par d'autres méthodes.

Cette alternative permet de limiter le nombre d'informations numériques à télédiffuser, notamment lorsque la station de mesure est installée dans une zone de faible connectivité.

### 4. Traitements des données acquises

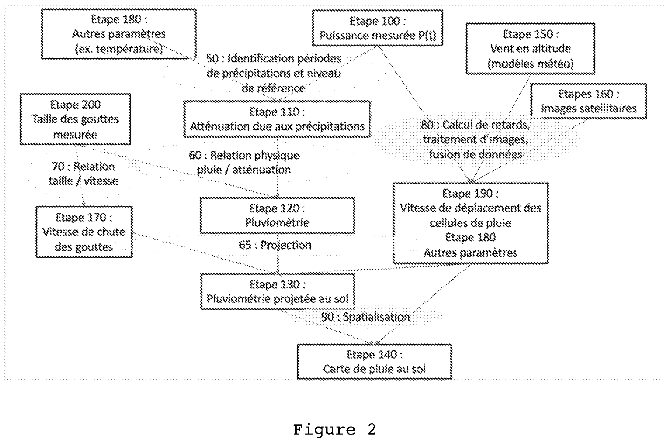

Un exemple de traitement des données est exposé ci-après à titre d'exemple, illustré par la figure 2 représentant le logigramme. Certains traitements sont réalisés station par station, soit directement par la station de mesure, soit par le serveur sur la base des données transmises par les stations de mesure.

Ces traitements concernent :

- l'identification des périodes de précipitations et du niveau de référence (étape 50) à partir de la puissance mesurée P(t) par la station de mesure considérée (étape 100) et éventuellement d'autres paramètres tels que la température (étape 180), par exemple par un algorithme dit « Perceptron Multi-Couches » ou encore un réseau de neurones récurrent dit « LSTM » (Long Short Term Memory).
- la détermination (étape 60) de la relation physique entre la pluie et la fluctuation de puissance due à la pluie (étape 110) calculée à partir de la puissance mesurée lors de l'étape (100),
- la taille des gouttes déterminée à l'étape (200) à partir de mesures multi polarisations / fréquences permet, en utilisant des relations entre la taille et la vitesse des gouttes (étape 70) de compléter les résultats de l'étape (110) de mesure de fluctuation de la puissance due à la pluie pour déterminer les taux de pluviométrie (étape 120)
- cette étape (70) permet aussi d'estimer la vitesse de la chute des gouttes (étape 170) pour réaliser une projection au sol de la pluviométrie (étape 130) en fonction du résultat de l'étape 120.

Par ailleurs, certains traitements sont réalisés non pas station par station mais sur la combinaison de mesures d'une pluralité de stations, réalisés globalement sur une zone d'intérêt couverte

- L'étape (80) de calcul de retards, traitement d'images, fusion de données à partir du résultat de la mesure de puissance de l'étape (100) et du modèle de vent en altitude (étape 150) ainsi que d'images satellitaires (étape 160) permet la détermination de la vitesse de déplacement des cellules de pluie (étape 190)

- La spatialisation (étape 90) permet la détermination d'une carte de pluie au sol (étape 140), par exemple par un algorithme d'assimilation 4D-VAR.

Selon une variante, la combinaison des mesures réalisées par une pluralité de stations pourra être utilisée pour détecter des variations simultanées du signal non dues à des hydrométéores et qui pourront ainsi être filtrées. Par exemple, si un même satellite, dont les émissions sont captées par plusieurs stations, modifie subitement la puissance de ses émissions, cette modification subite sera immédiatement détectée sur les différentes stations concernées (via un algorithme de recherche de corrélations) et pourra être corrigée dans la chaîne de traitement.

### 5. Exploitation des signaux provenant des dispositifs d'acquisition : détermination de la pluviométrie

Les traitements ci-après peuvent être réalisés localement, par un calculateur de la station de mesure, ou de manière centralisée, par un serveur. Les traitements réalisés localement ne dispenseront cependant généralement pas de traitements centralisés (plus complets et donc plus précis) et ne seront utilisés que pour limiter la transmission de données en cas d'installation dans une zone de faible connectivité, comme décrit plus haut.

Les messages télédiffusés (P(t),t) par les dispositifs d'acquisition STATION$_i$ sont collectés (étape 100) par un serveur procédant à l'enregistrement horodaté de ces messages reçus dans une base de données.

Les traitements appliqués aux données enregistrées sont appliqués dans un premier temps aux données de chacun des dispositifs d'acquisition pour déterminer l'atténuation (étape 110) due à des précipitations et en déduire le taux de précipitation sur le trajet entre le satellite émetteur et le dispositif STATION$_i$ considéré. Ce traitement (étape 50) consiste tout d'abord à éliminer les contributions non-désirées à la variabilité du signal reçu, comme par exemple celle due aux variations d'autres paramètres environnementaux mesurés ou déterminés extérieurement (typiquement la température) (étape 180). Cette étape est typiquement réalisée par un réseau de neurones.

Ce traitement (étape 50) consiste ensuite à identifier dans les données enregistrées les points remarquables correspondant à un début ou à une fin de précipitations.

L'identification des points remarquables peut être réalisée par différentes méthodes :
L'une des méthodes est basée sur l'utilisation d'un réseau de neurones indiquant pour chaque date et chaque STATION$_i$ s'il y a des précipitations ou non. Ce réseau prend en entrée les données enregistrées par la station de mesure sur une fenêtre temporelle récente, ou tout paramètre pouvant être déduit de ces données et susceptible de caractériser la présence ou l'absence de précipitations, par exemple la variance ou la pente locale de la série de mesures. Il peut aussi prendre en entrée les données issues d'une autre station proche, ainsi que potentiellement d'autres données environnementales mesurées au niveau des stations ou proches d'elles, par exemple la température de l'air ou de la tête LNB de réception. Ce réseau de neurones peut être de type supervisé ou non supervisé. Il peut ainsi s'agir par exemple d'un Multi-Layer Perceptron, d'un réseau de neurones convolutif, ou de tout autre système du même type. S'il est supervisé, les données d'apprentissage sont labellisées "précipitations" ou "non-précipitations" en utilisant des données indépendantes fournissant une connaissance sur les précipitations, par exemple provenant de mesures par radar météorologique ou par pluviomètre. Le réseau de neurones fournit typiquement en sortie un coefficient pouvant être interprété comme une probabilité que l'échantillon d'entrée corresponde à une date avec ou sans précipitations. Un seuil sur cette probabilité peut ensuite typiquement permettre de classifier l'échantillon comme avec précipitations ou sans.

Ces points remarquables sont ensuite utilisés afin de calculer un niveau de référence pour le signal correspondant à la puissance du signal qui serait reçue de l'émetteur en l'absence d'hydrométéores et noté (Pref(t),t).

On peut alors calculer une séquence de fluctuations d'origine pluviométrique de la puissance reçue (ou dues à d'autres hydrométéores) (ΔP(t),t) selon :

$$\Delta P(t) = P(t) - Pref(t)$$

À partir des points remarquables, le niveau Pref(t) est typiquement déterminé selon cette procédure :

○ entre les instants de début tdj et de fin tfj de périodes avec précipitations, Pref(t) correspond à une interpolation entre (P(tdj),tdj) et (P(tfj),tfj)
○ entre les instants de fin de précipitations tfj et de début de précipitations suivante tdj+1 :

$$Pref(t) = P(t)$$

○ après un début de précipitations tdj dont la fin correspondante n'a pas encore été détectée :

$$Pref(t) = P(tdj))$$

On peut noter également que dans une variante ce traitement, l'étape 50 est réalisée en déduisant directement Pref(t) à partir de P(t), de la mesure d'autres paramètres environnementaux à proximité du site d'acquisition (température, humidité, etc.) et de paramètres propres au système (températures des différents éléments, tension d'alimentation, ...), par l'application d'un réseau de neurones de type « LSTM », supervisé et donc entraîné avec des données radar ou pluviomètres. On ne passe pas dans ce cas-là par l'étape de détermination des points remarquables.

Ce traitement (étape 50) consiste enfin à identifier, en cas de précipitations, le type d'hydrométéores en jeu (pluie, neige, grêle). Cette étape d'identification peut être avantageusement réalisée simultanément à la précédente (classification "précipitations" - "non-précipitations" des mesures), par exemple en utilisant le même réseau de neurones et en lui intégrant des données mesurées à différentes polarisations ou fréquences. L'étape suivante consiste à inverser ces valeurs pour déterminer une intensité de précipitations (R(t),t) (étape 120) correspondant à la fonction inverse desdites valeurs de fluctuation (ΔP(t),t). Pour le cas de la pluie, il est possible de déterminer le taux de pluie R en appliquant le schéma suivant (étape 60) :

- acquisition de l'altitude Zo de l'isotherme 0°C
- calcul de Lo, la distance traversée par le signal en dessous de l'isotherme 0°C, en fonction de l'altitude Zo et de la géométrie du problème - détermination du taux de pluie

$$R(t)_i = \sqrt[b]{\frac{k.|\Delta P(t)_i|}{Lo}}$$

où :

- R désigne le taux de pluie en millimètres par heure
- Lo désigne la distance traversée par le signal en dessous de l'isotherme 0°C
- ΔP(t) désigne la fluctuation de la puissance reçue en décibels
- b et k désignent des coefficients dépendant majoritairement de la fréquence, de la polarisation du signal radiofréquence et de la distribution en tailles des gouttes. D'autres paramètres liés à la géométrie du problème (angle d'incidence de l'onde sur les gouttes par exemple) et de paramètres environnementaux (température de l'eau par exemple) sont également susceptibles de les influencer dans une moindre mesure.

Dans le cadre de cette demande, la réalisation de mesures à plusieurs fréquences et sous plusieurs polarisations permettra d'obtenir des informations sur les tailles caractéristiques des gouttes de pluie. En effet, l'atténuation/augmentation provoquée par la pluie est directement reliée à la distribution en taille des gouttes ainsi qu'à leur section efficace d'extinction. Cette section est elle-même fonction du diamètre des gouttes, de leur forme et de la polarisation de l'onde considérée, selon la théorie de la diffusion de Mie. Par exemple, les gouttes en chute libre ne sont pas sphériques mais aplaties. Elles auront donc une section d'extinction d'autant plus importante, et provoqueront de là une atténuation d'autant plus grande, que l'onde qui les touchera sera en polarisation horizontale (par rapport au sol). En supposant une relation ferme entre forme et diamètre des gouttes (d'autant plus aplaties qu'elles sont grosses), effectuer des mesures de la même pluie à plusieurs polarisations permet de calculer des atténuations/augmentations différentielles (par exemple rapport des atténuations/ augmentations obtenues en polarisations horizontale et verticale) et de là d'accéder à des informations sur la distribution en taille des gouttes (déduction par exemple de moments de cette distribution). On note qu'il est nécessaire pour cela de transformer les composantes horizontale et verticale de la tête LNB (normalement réglée sur celles du satellite) vers des composantes horizontale et verticale par rapport au sol avant de comparer les différences de mesure. Avantageusement, il faut corriger également ces composantes en prenant en compte la trajectoire des gouttes et l'angle d'incidence de l'onde par rapport à la verticale et à la trajectoire des gouttes.

Ce même travail peut être fait plus directement en calculant des atténuations/augmentations différentielles sur des mesures à même polarisation mais à fréquences/bandes de fréquences différentes.

Avantageusement, on pourra fusionner ces différentes méthodes de détermination.

6. Exploitation des signaux provenant des dispositifs d'acquisition : restitution de cartes de pluie

Les traitements ci-après sont réalisés de manière centralisée, sur un serveur, et visent à produire une carte de la pluviométrie au niveau du sol (étape 140).

1 / On commence par effectuer une estimation de la vitesse de déplacement des cellules de précipitations (étape 190).

L'apprentissage de cette vitesse (étape 80) peut se faire à partir de l'une des sources de données suivantes, ou avantageusement pour améliorer la précision et la robustesse de l'estimation, par la fusion de plusieurs de ces sources de données :

- une estimation directe à partir des séries temporelles de fluctuation de la puissance reçue enregistrées par les différents capteurs.

Une solution pour cela consiste à estimer pour chaque paire de capteurs un délai ("lag") entre les dates de début de précipitation sur chacun des capteurs, puis de déduire par triangulation le déplacement des cellules de précipitation à partir des délais pour toutes les paires de capteurs (connaissant leurs positions).

- une estimation indirecte à partir d'images satellitaires des masses nuageuses (étape 160).

Une solution pour cela consiste à estimer des vecteurs de déplacements à partir d'images nuageuses obtenues en temps réel par des satellites géostationnaires météorologiques.

- une modélisation du vent en altitude par des modèles météorologiques (étape 150).

Les modèles opérationnels de prévision numérique du temps simulent le vent en altitude. Ce vent est supposé représentatif de la vitesse de déplacement des nuages et des cellules de précipitations.

2 / On projette sur le sol les mesures de pluviométrie réalisées par chaque capteur (étape 130).

Cette projection est réalisée en tenant compte de la position du capteur, de l'altitude Zo de l'isotherme 0°, de la vitesse de chute des gouttes de pluie, et de la vitesse de déplacement des cellules pluvieuses (étape 65).

Par exemple, on sait que la mesure brute réalisée par un capteur donné visant un satellite géostationnaire correspond à la pluviométrie moyenne sur un segment de quelques kilomètres de long (jusqu'à l'isotherme 0°) faisant un angle d'environ 40° avec le sol (exemple depuis la France).

La partie de la mesure correspondant à l'extrémité haute du segment correspondra à une pluviométrie au niveau du sol obtenue quelques minutes plus tard (le temps que les gouttes tombent) et un peu plus loin dans la direction du déplacement des cellules (les gouttes ne tombant pas perpendiculairement au sol).

La vitesse de chute des gouttes de pluie (étape 170) pourra être avantageusement ajustée selon la taille caractéristique des gouttes de pluie déduite des mesures réalisées sur différentes polarisations / bandes de fréquence (étape 200) par l'application de relations théoriques et / ou empiriques entre taille des gouttes et vitesse de chute (étape 70).

3 / On procède à une reconstitution de la carte de pluie au sol (étape 90).

Cette étape consiste à la date t à fusionner de manière optimale les mesures réalisées par un ensemble de capteurs sur une période [t-T:t] pour produire une carte de la pluie au sol sur la zone autour des capteurs sur la même période [t-Tf:t], où 1/Tf désigne la fréquence à laquelle on répète périodiquement cette étape de fusion de données.

Cette étape (étape 90) peut également intégrer, outre des mesures de pluviométrie réalisées selon le procédé décrit ci-avant, des données de pluviométrie mesurées par d'autres instruments (par exemple pluviomètres, radars météorologiques, satellites météorologiques, données opportunistes déduites par exemple d'images webcam).

Cette étape (étape 90) peut avantageusement être réalisée grâce à un algorithme d'assimilation de données, par exemple de type 4D-VAR.

Cet algorithme peut inclure un modèle A(t,Tf) simulant l'évolution des cellules de pluie de la date t-Tf à la date T et prenant comme paramètre la vitesse de déplacement des cellules de pluie.

Cet algorithme prend en entrée les mesures de pluviométrie des capteurs projetées au sol selon le point 2/ et fournit en sortie les cartes de pluie au sol sur la période [t-Tf:t].

Un tel algorithme est également particulièrement bien adapté pour fusionner des données provenant de différents types d'instruments (radars, pluviomètres, etc.) comme indiqué ci-avant par la définition d'opérateurs d'observations (et d'erreurs associées) simulant les mesures réalisées par ces instruments à partir des cartes de pluviométries au niveau du sol.

<u>Mode de réalisation selon l'invention telle que revendiquée</u>

Un mode de réalisation selon l'invention telle que revendiquée consiste à exploiter le signal radiofréquence émis par les gouttes de pluie elles-mêmes, qui émettent selon la loi de Planck un signal sur tout le spectre électromagnétique et/ou qui rediffusent selon la théorie de Mie les ondes électromagnétiques traversant la zone de présence de ces dernières. La mesure se fera alors préférentiellement sur la bande Ku, et sera de type radiométrique. Dans ce cas, la fluctuation du signal mesuré enregistre alors un surplus de signal radio du fait de l'émission des gouttes de pluie. La détermination du taux de pluie R(t) se fait alors conformément au procédé susvisé mais avec des coefficients b et k déterminés empiriquement à partir de calibrations réalisées avec d'autres instruments de mesure de la pluie.

**Revendications**

1. - Procédé de mesure des précipitations consistant :

- à acquérir depuis au moins un site d'acquisition PA de coordonnées (x,y,z) au moins un signal radio émis depuis au moins un émetteur, ledit signal radio étant constitué par le signal émis par les gouttes de pluie et autres hydrométéores, et
- à mesurer périodiquement la puissance P(t) d'une composante du signal reçu afin de créer des séries de niveaux horodatés (P(t),t),
- à procéder à un traitement sur au moins une fenêtre temporelle glissante de N valeurs d'au moins une série horodatée (P(t), t) combinée à d'autres séries temporelles (Mp(t),t) de paramètres environnementaux au niveau ou à proximité du site d'acquisition PA et de paramètres relatifs au système, consistant

⚬ d'une part à déterminer le type d'hydrométéores en jeu, et

⚬ d'autre part à déterminer un niveau de référence pour le signal correspondant à la puissance du signal qui serait reçue de l'émetteur en l'absence d'hydrométéores et noté (Pref(t),t),

- à calculer en temps réel une séquence de fluctuations de la puissance d'origine pluviométrique ou dues à d'autres hydrométéores (ΔP(t),t) selon :

$$\Delta P(t) = P(t) - Pref(t)$$

2. - Procédé de mesure des précipitations selon la revendication 1 **caractérisé en ce que** les paramètres (Mp(t), t) sont utilisés afin de corriger la mesure faite pour éliminer les contributions non-désirées par un réseau de neurones récurrent prenant en entrée les séries (Mp(t),t), entraîné face à des mesures de (P(t),t) sur des périodes sans pluie, et renvoyant en sortie une série temporelle (Pcorr(t),t) correspondant aux (P(t),t) avec filtrage des contributions non désirées.

3. - Procédé de mesure des précipitations selon la revendication 1 **caractérisé en ce que** ladite détermination du niveau de référence pour le signal est réalisée simultanément ou non à l'identification des hydrométéores mis en jeu en exécutant un traitement consistant :

- à déterminer les dates de début ou de fin de période avec précipitations en fonction de la variance, de la vitesse de variations et d'une manière générale de la signature desdites valeurs (p(t),t), ladite signature étant calculée à partir de la valeur efficace d'un filtrage numérique desdites valeurs (P(t),t) sur une bande définie de fréquences basses
- à déterminer Pref(t) selon les cas suivants :

⚬ entre les instants de début tdj et de fin tfj de périodes avec précipitations, Pref(t) correspondant à une interpolation entre (P(tdj),tdj) et (P(tfj),tfj)
⚬ entre les instants de fin de précipitations tfj et de début de précipitations suivante tdj+1 :

$$Pref(t) = P(t)$$

⚬ après un début de précipitations tdj dont la fin correspondante n'a pas encore été détectée :

$$Pref(t) = P(tdj)$$

4. - Procédé de mesure de précipitations selon la revendication précédente **caractérisé en ce que** l'étape de détermination des début et fin de période de précipitations est réalisée par un réseau de neurones.

5. - Procédé de mesure de précipitations selon la revendication 1 **caractérisé en ce que** la détermination du niveau de référence (Pref(t),t) est réalisée par un réseau de neurones prenant en entrée les séries temporelles (P(t),t) et les autres paramètres (Mp(t),t), entraîné face à des données de référence (radar ou pluviomètre) et fournissant en sortie le niveau de référence (Pref(t),t).

6. - Procédé de mesure de précipitations selon la revendication précédente **caractérisé en ce que** ledit réseau de neurones pourra être un réseau récurrent de type LSTM (Long Short Term Memory).

7. - Procédé de mesure de pluviométrie selon l'une quelconque des revendications précédentes **caractérisé en ce que** l'on procède en outre aux étapes suivantes :

- acquisition de l'altitude Zo de l'isotherme 0°C
- calcul de Lo, la distance traversée par le signal en dessous de l'isotherme 0°C, en fonction de l'altitude Zo et de la géométrie du problème détermination du taux de pluie

$$R(t)_i = \sqrt[b]{\frac{k.|\Delta P(t)_i|}{Lo}}$$

où :

▪ R désigne le taux de pluie en millimètres par heure
▪ Lo désigne la distance traversée par le signal en dessous de l'isotherme 0°C
▪ ΔP(t) désigne la fluctuation de la puissance reçue en décibels
▪ b et k désignent des coefficients dépendant majoritairement de la fréquence, de la polarisation du signal radiofréquence et de la distribution en taille des gouttes.

8. - Procédé de mesure de précipitations selon la revendication 1 **caractérisé en ce que** ledit signal radio émis depuis au moins un émetteur comprend en outre le signal radio émis par un satellite, préférablement un satellite géostationnaire de télévision en bande Ku, Ka ou V.

9. - Procédé de mesure de précipitations selon la revendication 1 **caractérisé en ce qu'**il comporte en outre des étapes de traitement réalisés station par station, comprenant :

○ l'identification des périodes de précipitations et du niveau de référence (étape 50) à partir de la puissance mesurée P(t) par la station de mesure considérée (étape 100)
○ la détermination (étape 60) de la relation physique entre la pluie et la fluctuation de puissance due à la pluie (étape 110) calculée à partir de la puissance mesurée lors de l'étape (100),
○ la détermination de la taille des gouttes (étape 200) à partir de mesures multi polarisations / fréquences,

- l'utilisation de la taille des gouttes déterminée à l'étape (200) et de la relation entre la taille et la vitesse des gouttes (étape 70) afin de compléter les résultats de l'étape (110) de mesure de la fluctuation de la puissance due à la pluie pour déterminer les taux de pluviométrie (étape 120),
- l'utilisation de la relation entre la taille et la vitesse des gouttes (étape 70) afin d'estimer la vitesse de la chute des gouttes (étape 170) pour réaliser une projection au sol de la pluviométrie (étape 130) en fonction du résultat de l'étape (120),

○ le calcul de retards, le traitement d'images, la fusion de données (étape 80) à partir du résultat de la mesure de puissance de l'étape (100) et du modèle de vent en altitude (étape 150) ainsi que d'images satellitaires (étape 160) pour la détermination de la vitesse de déplacement des cellules de pluie (étape 190)
○ la spatialisation (étape 90) pour la détermination d'une carte de pluie au sol (étape 140).

10. - Procédé de mesure des précipitations selon la revendication 1 **caractérisé en ce qu'**il comporte une étape de filtration de ladite combinaison des mesures réalisées par une pluralité de stations par détection des variations simultanées de la puissance des émissions détectées sur les différentes stations concernées.

11. - Procédé de réalisation d'une carte des précipitations consistant à déterminer, pour une pluralité de dispositifs d'acquisition $STATION_i$ les taux de précipitations moyens R(t) fournis par le procédé conforme à la revendication 7, et réaliser ensuite une étape de cartographie consistant à procéder à une projection au sol desdits taux de pluie $R(t)_i$ en fonction de l'altitude Zo de l'isotherme 0°C.

12. - Procédé de réalisation d'une carte des précipitations selon la revendication précédente, **caractérisé en ce que** l'on procède audit traitement pour chaque dispositif d'acquisition $STATION_i$ et **en ce que** l'on détermine les projections au sol du taux de pluie Rx,y,z(t) en fonction :

- desdites valeur $(\Delta P(t),t)_i$ de fluctuation de la puissance reçue correspondant auxdits dispositifs $STATION_i$,
- de la longueur $Lo_i(t)$ du segment de la liaison $STATION_i$-émetteur $E_i$ compris entre le sol et l'altitude Zo(t) de l'isotherme 0°C.

13. - Procédé de réalisation d'une carte des précipitations selon la revendication précédente **caractérisé en ce que** ladite étape de détermination des projections au sol du taux de pluie $R_{x,y,z}(t)$ est en outre fonction du temps et de la direction de chute des gouttes dans le volume comprenant les positions desdits dispositifs.

14. - Procédé de réalisation d'une carte des précipitations selon la revendication 11 **caractérisé en ce que** ladite étape d'acquisition d'au moins un signal radio transmis depuis au moins un émetteur de radiofréquences et la mesure périodique de la puissance dudit signal est réalisée par un dispositif d'acquisition $STATION_i$ constitué par un module présentant une entrée pour recevoir le signal provenant d'une antenne de réception radio-fréquence, un composant sélectionnant une partie du signal utile en le transposant potentiellement vers une bande de fréquence plus basse, un circuit électronique pour la mesure du niveau du signal d'entrée et du calcul d'une valeur numérique représentative dudit niveau et des moyens de communication pour la télédistribution d'un message numérique comprenant ladite valeur numérique et des paramètre locaux optionnels comme l'identifiant $ID_i$ dudit dispositif d'acquisition $STATION_i$.

15. - Procédé de réalisation d'une carte des précipitations selon la revendication 11 **caractérisé en ce qu'**un calculateur équipant un serveur commande les traitements consistant à :

- estimer la vitesse de déplacement des cellules de pluie (étape 180) par une estimation directe à partir des données temporelles $\Delta P(t)_i$ de fluctuations de la puissance reçue calculées à partir des données $P(t)_i$ mesurées par les différentes stations de mesure $PA_i$ géolocalisées en $(x,y,z)_i$ et enregistrées par les différents capteurs

- calculer une projection sur le sol des mesures de pluviométries réalisées par chaque station de mesure $PA_i$, en tenant compte de la position du capteur, de l'altitude Zo de l'isotherme 0°, de la vitesse de chute des gouttes de pluie, et de la vitesse de déplacement des cellules de précipitations.

- procéder périodiquement à une fréquence 1/Tf à une reconstitution de la carte de pluie au sol par une étape de fusion des mesures réalisées par un nombre significatif de stations de mesure $STATION_i$, sur une période [t-T:t] (avec T>Tf) pour produire une carte de la pluie au sol sur la zone autour des capteurs sur la période [t-Tf:t].

**16.** - Procédé de réalisation d'une carte des précipitations selon la revendication précédente **caractérisé en ce que** ladite estimation de la vitesse de déplacement des cellules de pluie :

- consiste à estimer pour chaque paire de stations de mesure ($STATION_i$;$STATION_j$) le délai/"lag" entre les dates de début de précipitation sur chacun des capteurs, puis à déduire par triangulation le déplacement des cellules de pluie à partir des délais pour toutes les paires de stations de mesure.
- est réalisée à partir d'images satellitaires des masses nuageuses
- consiste en une modélisation du vent en altitude par des modèles météorologiques
- ou enfin, consiste en une fusion d'au moins 2 des méthodes précédentes.

**17.** - Procédé de réalisation d'une carte des précipitations selon la revendication 15 **caractérisé en ce que** ladite étape de fusion des mesures réalisées par un nombre significatifs de stations de mesure $STATION_i$ est réalisée par un traitement d'assimilation de données fonction d'un modèle représentatif de l'état de l'atmosphère A(t).

**18.** - Procédé de réalisation d'une carte des précipitations selon la revendication 15 **caractérisé en ce que** ladite étape de fusion des mesures réalisée par un traitement d'assimilation de données fusionne des données de différentes natures et provenant de différents types d'instruments, ces instruments pouvant notamment être un nombre significatif de stations de mesure $STATION_i$, des radars météorologiques, des pluviomètres ou des disdromètres.

**19.** - Dispositif d'acquisition pour la mise en oeuvre du procédé conforme à la revendication 1 **caractérisé en ce qu'**il comprend une entrée pour recevoir le signal provenant d'une antenne de réception radiofréquence, un circuit électronique pour la mesure du niveau du signal d'entrée et du calcul d'une valeur numérique représentative dudit niveau et des moyens de communication pour la télédistribution d'un message numérique comprenant au moins un des éléments suivants :

- ladite valeur numérique image de la puissance
- un identifiant $ID_i$ dudit dispositif d'acquisition $STATION_i$
- la position instantanée de la $STATION_i$
- les informations sur les composantes mesurées des signaux
- les informations sur le ou les émetteurs écoutés
- des informations relatives aux conditions de météorologie locales
- des informations relatives aux résultats de calculs menés localement, ...

**20.** - Dispositif d'acquisition selon la revendication précédente **caractérisé en ce que** ladite antenne de réception radiofréquence soit constituée d'une parabole satellite (1) équipée d'une tête universelle de type LNB (2).

**21.** - Dispositif d'acquisition selon la revendication précédente, **caractérisé en ce qu'**il comprend en outre :

- un système photovoltaïque (14) constitué d'un panneau solaire, d'une batterie et d'un contrôleur électronique.
- un moyen de communication de type radiofréquence

**22.** - Dispositif d'acquisition selon la revendication précédente **caractérisé en ce qu'**il comprend un circuit de mise en veille dudit moyen de communication radio-fréquence, commandé par un signal représentatif de la présence de précipitations dans la visée dudit dispositif, par des informations provenant du réseau ou par l'état de la station à court/moyen terme, en fonction de la quantité d'énergie présente dans la batterie ainsi que la disponibilité prévue de la source d'énergie.

**23.** - Dispositif d'acquisition selon la revendication 20, **caractérisé en ce qu'**il comprend un moyen d'éteindre périodiquement la tête LNB (2).

**24.** - Dispositif d'acquisition selon la revendication précédente, **caractérisé en ce qu'**il comprend un moyen pour ajuster la périodicité de l'extinction de la tête LNB (2) en fonction d'un signal représentatif de la présence de précipitations dans la visée dudit dispositif, en fonction d'informations provenant du réseau ou en fonction de l'état de la station à court/moyen terme.

**25.** - Dispositif d'acquisition selon la revendication 20, **caractérisé en ce qu'**il comprend un moyen de commande de la variation périodique de la polarisation et/ou de la bande de fréquence de la tête LNB (2), pour la mesure des différentes composantes du signal reçu.

**26.** - Dispositif d'acquisition selon la revendication 20, **caractérisé en ce qu'**il comprend un moyen de protection thermique (12) de la tête LNB (2) et des batteries de l'alimentation (3).

**27.** - Dispositif d'acquisition selon la revendication 19, **caractérisé en ce qu'**il comprend au moins un capteur (11) fournissant au calculateur des paramètres locaux dans le but d'éliminer les contributions non-désirées dans la mesure du signal.

**Patentansprüche**

**1.** Verfahren zur Niederschlagsmessung bestehend aus:

- Erfassen mindestens eines Funksignals, das von mindestens einem Sender ausgesendet wird von mindestens einem Erfassungsort PA mit den Koordinaten (x, y, z), wobei das Funksignal aus dem Signal besteht, das von den Regentropfen und anderen Hydrometeoren ausgesendet wird, und
- periodisches Messen der Leistung P(t) einer Komponente des empfangenen Signals, um Reihen von zeitgestempelten Pegeln (P(t),t) zu erzeugen,
- Durchführen einer Verarbeitung über mindestens ein gleitendes Zeitfenster von N Werten mindestens einer zeitgestempelten Reihe (P(t),t) in Kombination mit anderen Zeitreihen (Mp(t),t) von Umgebungsparametern auf Höhe oder in der Nähe des Erfassungsortes PA und systembezogener Parametern, bestehend

○ einerseits aus dem Bestimmen des Typs der betroffenen Hydrometeore, und
○ andererseits aus dem Bestimmens eines Referenzpegels für das Signal, der der Leistung des Signals entspricht, das vom Sender bei Nichtvorhandensein von Hydrometeoren empfangen und mit (Pref(t),t) angeben wird,

- Echtzeit-Berechnen einer Folge von Leistungsschwankungen, die durch Niederschläge oder andere Hydrometeore verursacht werden, ($\Delta$P(t),t) gemäß:

$$\Delta P(t) = P(t) - Pref(t)$$

**2.** Verfahren zur Niederschlagsmessung nach Anspruch 1, **dadurch gekennzeichnet, dass** die Parameter (Mp(t),t) verwendet werden, um die durchgeführte Messung zu korrigieren, um die unerwünschten Beiträge durch ein rekurrentes neuronales Netz zu eliminieren, das als Eingabe die Reihen (Mp(t),t) verwendet, mit Messungen von (P(t),t) über Zeiträume ohne Regen trainiert wurde und als Ausgabe eine Zeitreihe (Pcorr(t),t) zurückgibt, die den (P(t),t) mit Filterung der unerwünschten Beiträge entspricht.

**3.** Verfahren zur Niederschlagsmessung nach Anspruch 1, **dadurch gekennzeichnet, dass** die Bestimmung des Referenzpegels für das Signal gleichzeitig oder nicht mit der Identifizierung der betroffenen Hydrometeore ausgeführt wird, indem eine Verarbeitung durchgeführt wird, bestehend aus:

- Bestimmen der Anfangs- oder Enddaten des Zeitraums mit Niederschlag in Abhängigkeit von der Varianz, der Änderungsgeschwindigkeit und im Allgemeinen der Signatur der Werte (p(t),t), wobei die Signatur aus dem Effektivwert einer digitalen Filterung der Werte (P(t),t) auf einem definierten Band niedriger Frequenzen berechnet wird,
- Bestimmen von Pref(t) gemäß den folgenden Fällen:

○ zwischen den Zeitpunkten des Beginns tdj und Endes tfj von Zeiträume mit Niederschlag, wobei Pref(t) einer Interpolation zwischen (P(tdj),tdj) und (P(tfj),tfj) entspricht,
○ zwischen den Zeitpunkten des Endes des Niederschlags tfj und des Beginns des folgenden Niederschlags tdj+1:

$$Pref(t) = P(t)$$

○ nach Beginn eines Niederschlags tdj, dessen entsprechendes Ende noch nicht erkannt wurde:

$$Pref(t) = P(tdj)$$

**4.** Verfahren zur Niederschlagsmessung nach dem vorhergehenden Anspruch, **dadurch gekennzeichnet, dass** der Schritt des Bestimmens des Beginns und des Endes des Niederschlagszeitraums durch ein neuronales Netz ausgeführt wird.

**5.** Verfahren zur Niederschlagsmessung nach Anspruch 1, **dadurch gekennzeichnet, dass** das Bestimmen des Referenzpegels (Pref(t),t) durch ein neuronales Netz ausgeführt wird, das die Zeitreihen (P(t),t) und die anderen Parameter (Mp(t),t) als Eingabe verwendet, mit Referenzdaten (Radar oder Regenmesser) trainiert wurde und als Ausgabe den Referenzpegel (Pref(t),t) liefert.

6. Verfahren zur Niederschlagsmessung nach dem vorhergehenden Anspruch, **dadurch gekennzeichnet, dass** das neuronale Netz ein rekurrentes Netz vom Typ LSTM (Long Short Term Memory) sein kann.

7. Verfahren zur Niederschlagsmessung nach einem der vorhergehenden Ansprüche, **dadurch gekennzeichnet, dass** ferner die folgenden Schritte durchgeführt werden:

  - Erfassen der Höhe Zo der 0°C-Isotherme
  - Berechnen von Lo, der vom Signal unter der 0°C-Isotherme zurückgelegten Strecke, in Abhängigkeit von der Höhe Zo und der Geometrie des Problems
  - Bestimmen der Regenrate

$$R(t)_i = \sqrt[b]{\frac{k.|\Delta P(t)_i|}{Lo}}$$ , wobei:

  ▪ R die Regenrate in Millimetern pro Stunde bezeichnet,
  ▪ Lo die Strecke bezeichnet, die das Signal unterhalb der 0°C-Isotherme zurücklegt,
  ▪ $\Delta P(t)$ die Schwankung der empfangenen Leistung in Dezibel bezeichnet,
  ▪ b und k Koeffizienten bezeichnen, die überwiegend von der Frequenz, der Polarisation des Hochfrequenzsignals und der Größenverteilung der Tropfen abhängig sind.

8. Verfahren zur Niederschlagsmessung nach Anspruch 1, **dadurch gekennzeichnet, dass** das von mindestens einem Sender ausgesendete Funksignal ferner das von einem Satelliten, vorzugsweise einem geostationären Ku-, Ka oder V-Band-Fernsehsatelliten, ausgesendete Funksignal umfasst.

9. Verfahren zur Niederschlagsmessung nach Anspruch 1, **dadurch gekennzeichnet, dass** es ferner Verarbeitungsschritte umfasst, die Station für Station ausgeführt werden, umfassend:

  ∘ Identifizieren der Niederschlagszeiträume und des Referenzpegels (Schritt 50) aus der von der betrachteten Messstation gemessenen Leistung P(t) (Schritt 100)
  ∘ Bestimmen (Schritt 60) der physikalischen Beziehung zwischen dem Regen und der Leistungsschwankung aufgrund des Regens (Schritt 110), berechnet aus der während Schritt (100) gemessenen Leistung,
  ∘ Bestimmen der Tropfengröße (Schritt 200) aus Multipolarisations-/Frequenzmessungen,

    - Verwenden der in Schritt (200) bestimmten Tropfengröße und der Beziehung zwischen der Größe und der Geschwindigkeit der Tropfen (Schritt 70), um die Ergebnisse des Schritts (110) des Messens der Leistungsschwankung aufgrund des Regens zu vervollständigen, um die Regenraten zu bestimmen (Schritt 120),
    - Verwenden der Beziehung zwischen der Größe und der Geschwindigkeit der Tropfen (Schritt 70), um die Fallgeschwindigkeit der Tropfen abzuschätzen (Schritt 170), um eine Bodenprojektion der Niederschlagsmessung (Schritt 130) gemäß dem Ergebnis von Schritt (120) auszuführen,

  ∘ Berechnen von Verzögerungen, Verarbeiten von Bildern, Zusammenführen von Daten (Schritt 80) aus dem Ergebnis der Leistungsmessung von Schritt (100) und dem Höhenwindmodell (Schritt 150) sowie Satellitenbildern (Schritt 160) zum Bestimmen der Bewegungsgeschwindigkeit der Regenzellen (Schritt 190)
  ∘ Verräumlichen (Schritt 90) zur Bestimmung einer Bodenregenkarte (Schritt 140).

10. Verfahren zur Niederschlagsmessung nach Anspruch 1, **dadurch gekennzeichnet, dass** es einen Schritt des Filterns der Kombination der von mehreren Stationen ausgeführten Messungen umfasst, indem die gleichzeitigen Leistungsänderungen der Emissionen erkannt werden, die an den verschiedenen betroffenen Stationen erkannt werden.

11. Verfahren zum Anfertigen einer Niederschlagskarte, das darin besteht, für mehrere Erfassungsvorrichtungen STATION_i die durch das Verfahren nach Anspruch 7 gelieferten mittleren Niederschlagsraten R(t) zu bestimmen und dann einen Kartierungsschritt auszuführen, der darin besteht, eine Bodenprojektion der Regenraten R(t)_i in Abhängigkeit von der Höhe Zo der 0°C-Isotherme durchzuführen.

12. Verfahren zum Anfertigen einer Niederschlagskarte nach dem vorhergehenden Anspruch, **dadurch gekennzeichnet, dass** die Verarbeitung für jede Erfassungsvorrichtung STATION_i durchgeführt wird und dass die Bodenprojektionen der Regenrate Rx,y,z(t) bestimmt werden in Abhängigkeit von:

  - dem Wert der Schwankung der empfangenen

Leistung ($\Delta P(t),t)_i$ der den Vorrichtungen STATION$_i$ entspricht,
- der Länge $Lo_i(t)$ des Segments der Verbindung STATION$_i$-Senders $E_i$, das zwischen dem Boden und der Höhe $Zo(t)$ der 0°C-Isotherme liegt.

13. Verfahren zum Anfertigen einer Niederschlagskarte nach dem vorhergehenden Anspruch, **dadurch gekennzeichnet, dass** der Schritt des Bestimmens der Bodenprojektionen der Regenrate $R_{x,y,z}(t)$ auch von der Fallzeit und -richtung der Tropfen in dem Volumen abhängig ist, das die Positionen der Vorrichtungen umfasst.

14. Verfahren zum Anfertigen einer Niederschlagskarte nach Anspruch 11, **dadurch gekennzeichnet, dass** der Schritt des Erfassens mindestens eines Funksignals, das von mindestens einem Hochfrequenzsender gesendet wird, und das periodische Messen der Leistung des Signals durch eine Erfassungsvorrichtung STATION$_i$ ausgeführt wird, bestehend aus einem Modul mit einem Eingang zum Empfangen des von einer Hochfrequenz-Empfangsantenne kommenden Signals, einer Komponente, die einen Teil des Nutzsignals auswählt, indem sie es möglicherweise in ein niedrigeres Frequenzband transponiert, einer Elektronikschaltung zum Messen des Pegels des Eingangssignals und Berechnen eines digitalen Werts, der den Pegel repräsentiert, und Kommunikationsmitteln für die Fernverteilung einer digitalen Nachricht, die den digitalen Wert und optionale lokale Parameter wie die Kennung ID$_i$ der Erfassungsvorrichtung STATION$_i$ umfasst.

15. Verfahren zum Anfertigen einer Niederschlagskarte nach Anspruch 11, **dadurch gekennzeichnet, dass** ein Rechner, mit dem ein Server ausgestattet ist, die Verarbeitungen steuert, bestehend aus:

- Schätzen der Bewegungsgeschwindigkeit der Regenzellen (Schritt 180) durch eine direkte Schätzung aus den zeitlichen Daten $\Delta P(t)_i$ von Schwankungen in der empfangenen Leistung, berechnet aus den Daten $P(t)_i$, die durch die verschiedenen an $(x,y,z)_i$ geolokalisierten Messstationen PA$_i$ gemessen und von den verschiedenen Sensoren aufgezeichnet wurden,
- Berechnen einer Bodenprojektion der von jeder Messstation PA$_i$ ausgeführten Niederschlagsmessungen unter Berücksichtigung der Position des Sensors, der Höhe $Zo$ der 0°-Isotherme, der Fallgeschwindigkeit der Regentropfen und der Bewegungsgeschwindigkeit der Niederschlagszellen,
- periodisches Durchführen einer Wiederherstellung einer Bodenregenkarte mit einer Häufigkeit von 1/Tf, durch einen Schritt des Zusammenführens der Messungen, die von einer signifikanten Anzahl von Messstationen STATION$_i$ ausgeführt wurden, über einen Zeitraum [t-T:t] (mit T>Tf), um eine Bodenregenkarte über das Gebiet um die Sensoren herum über den Zeitraum [t-Tf:t] zu erstellen.

16. Verfahren zum Anfertigen einer Niederschlagskarte nach dem vorhergehenden Anspruch, **dadurch gekennzeichnet, dass** die Schätzung der Bewegungsgeschwindigkeit der Regenzellen:

- darin besteht, für jedes Paar von Messstationen (STATION$_i$; STATION$_j$) die Verzögerung/den "Lag" zwischen den Daten zum Niederschlagsbeginn bei jedem der Sensoren abzuschätzen und dann durch Triangulation die Bewegung der Regenzellen aus den Verzögerungen für alle Paare von Messstationen abzuleiten,
- aus Satellitenbildern von Wolkenmassen durchgeführt wird,
- aus einer Modellierung des Höhenwindes durch meteorologische Modelle besteht,
- oder schließlich aus einer Verschmelzung von mindestens 2 der vorangegangenen Verfahren besteht.

17. Verfahren zum Anfertigen einer Niederschlagskarte nach Anspruch 15, **dadurch gekennzeichnet, dass** der Schritt des Zusammenführens der Messungen, die von einer signifikanten Anzahl von Messstationen STATION$_i$ ausgeführt wurden, durch eine Assimilationsverarbeitung von Funktionsdaten eines repräsentativen Modells des Zustands der Atmosphäre $A(t)$ ausgeführt wird.

18. Verfahren zum Anfertigen einer Niederschlagskarte nach Anspruch 15, **dadurch gekennzeichnet, dass** der durch eine Assimilationsverarbeitung von Daten durchgeführte Schritt des Zusammenführens von Messungen Daten unterschiedlicher Art zusammenführt, die von unterschiedlichen Instrumententypen stammen, wobei diese Instrumente insbesondere eine signifikante Anzahl von Messstationen STATION$_i$, Wetterradaren, Niederschlagsmessern oder Disdrometern sein können.

19. Erfassungsvorrichtung zur Durchführung des Verfahrens nach Anspruch 1, **dadurch gekennzeichnet, dass** sie einen Eingang zum Empfangen des Signals, das von einer Hochfrequenz-Empfangsantenne kommt, eine elektronische Schaltung zum Messen des Pegels des Eingangssignals und zum Berechnen eines repräsentativen digitalen Werts des Pegels und Kommunikationsmittel für die Fernverteilung einer digitalen Nachricht umfasst, die mindestens eines der folgenden Elemente umfasst:

- den digitalen Wert, der die Leistung repräsentiert
- eine Kennung $ID_i$ der Erfassungsvorrichtung $STATION_i$
- die momentane Position der $STATION_i$
- Informationen über die gemessenen Signalkomponenten
- Informationen über den oder die gehörten Sender
- Informationen zu den lokalen Wetterbedingungen
- Informationen zu den Ergebnissen von vor Ort durchgeführten Berechnungen, usw.

20. Erfassungsvorrichtung nach dem vorhergehenden Anspruch, **dadurch gekennzeichnet, dass** die Hochfrequenz-Empfangsantenne aus einer Satellitenschüssel (1) besteht, die mit einem LNB-Universalkopf (2) ausgestattet ist.

21. Erfassungsvorrichtung nach dem vorhergehenden Anspruch, **dadurch gekennzeichnet, dass** sie ferner umfasst:

    - ein Photovoltaiksystem (14), bestehend aus einem Solarmodul, einer Batterie und einer elektronischen Steuerung
    - ein Hochfrequenz-Kommunikationsmittel.

22. Erfassungsvorrichtung nach dem vorhergehenden Anspruch, **dadurch gekennzeichnet, dass** sie eine Standby-Schaltung für das Hochfrequenz-Kommunikationsmittel umfasst, das durch ein Signal, welches für das Vorhandensein von Niederschlag in Sichtweite der Vorrichtung repräsentativ ist, durch Informationen, die vom Netz stammen, oder durch den kurz-/mittelfristigen Zustand der Station in Abhängigkeit von der in der Batterie vorhandenen Energiemenge sowie der vorgesehenen Verfügbarkeit der Energiequelle gesteuert wird.

23. Erfassungsvorrichtung nach Anspruch 20, **dadurch gekennzeichnet, dass** sie ein Mittel zum periodischen Abschalten des LNB-Kopfes (2) umfasst.

24. Erfassungsvorrichtung nach dem vorhergehenden Anspruch, **dadurch gekennzeichnet, dass** sie ein Mittel zum Einstellen der Periodizität des Abschaltens des LNB-Kopfes (2) in Abhängigkeit von einem Signal, welches für das Vorhandensein von Niederschlag in Sichtweite der Vorrichtung repräsentativ ist, in Abhängigkeit von Informationen, die aus dem Netz stammen, oder in Abhängigkeit vom kurz-/mittelfristigen Zustand der Station umfasst.

25. Erfassungsvorrichtung nach Anspruch 20, **dadurch gekennzeichnet, dass** sie ein Mittel zum Steuern der periodischen Variation der Polarisation und/oder des Frequenzbands des LNB-Kopfes (2) für die Messung der verschiedenen Komponenten des empfangenen Signals umfasst.

26. Erfassungsvorrichtung nach Anspruch 20, **dadurch gekennzeichnet, dass** sie ein Mittel zum thermischen Schutz (12) des LNB-Kopfes (2) und der Batterien der Stromversorgung (3) umfasst.

27. Erfassungsvorrichtung nach Anspruch 19, **dadurch gekennzeichnet, dass** sie mindestens einen Sensor (11) umfasst, der den Computer mit lokalen Parametern versorgt, um bei der Messung des Signals die unerwünschten Beiträge zu eliminieren.

## Claims

1. Method for measuring precipitation, consisting in:

    - acquiring, from at least one acquisition site PA having coordinates (x,y,z), at least one radio signal emitted from at least one transmitter, said radio signal consisting of the signal emitted by the raindrops and other hydrometeors, and
    - periodically measuring the power P(t) of a component of the received signal in order to create series of timestamped levels (P(t),t),
    - carrying out processing, over at least one sliding time window, of N values of at least one timestamped series (P(t), t) combined with other time series (Mp(t),t) of environmental parameters at or near the acquisition site PA and system-related parameters, which processing consists in

        ∘ determining the type of hydrometeors involved, and
        ∘ determining a reference level for the signal corresponding to the power of the signal which would be received from the transmitter in the absence of hydrometeors and denoted (Pref(t),t),

    - calculating, in real time, a sequence of power fluctuations as a result of rainfall or due to other hydrometeors (ΔP(t),t) according to:

$$\Delta P(t) = P(t)\text{-}Pref(t)$$

2. Method for measuring precipitation according to claim 1, **characterized in that** the parameters (Mp(t), t) are used in order to correct the measurement made in order to eliminate the undesired contributions by means of a recurrent neural network which takes as input the series (Mp(t),t), is trained against measurements of (P(t),t) over periods without rain, and returns as output a time series (Pcorr(t),t) corresponding to (P(t),t) with filtering of undesired contributions.

3. Method for measuring precipitation according to claim 1, **characterized in that** said determination of the reference level for the signal is carried out simultaneously or not with the identification of the hydrometeors involved, by executing a processing operation consisting in:

- determining the start or end dates of the period with precipitation on the basis of the variance, of the speed of variations and in general of the signature of said values (p(t),t), said signature being calculated from the effective value of a digital filtering of said values (P(t),t) over a defined band of low frequencies,
- determining Pref(t) according to the following cases:

  ○ between the start tdj and end tfj times of periods with precipitation, Pref(t) corresponding to an interpolation between (P(tdj),tdj) and (P(tfj),tfj)
  ○ between the end time of precipitation tfj and start time of following precipitation tdj+1 :

$$Pref(t) = P(t)$$

  ○ after a start of precipitation tdj of which the corresponding end has not yet been detected:

$$Pref(t) = P(tdj)$$

4. Method for measuring precipitation according to the preceding claim, **characterized in that** the step of determining the start and end of the precipitation period is carried out by a neural network.

5. Method for measuring precipitation according to claim 1, **characterized in that** the determination of the reference level (Pref(t),t) is carried out by a neural network which takes as input the time series (P(t),t) and the other parameters (Mp(t),t), is trained against reference data (radar or rain gauge), and provides as output the reference level (Pref(t),t).

6. Method for measuring precipitation according to the preceding claim, **characterized in that** said neural network may be a recurrent network of the LSTM (long short term memory) type.

7. Method for measuring precipitation according to any one of the preceding claims, **characterized in that** the following steps are also carried out:

- acquisition of the altitude Zo of the 0°C isotherm
- calculation of Lo, the distance crossed by the signal below the 0°C isotherm, depending on the altitude Zo and the geometry of the problem
- determination of the rain rate

$$R(t)_i = \sqrt[b]{\frac{k.|\Delta P(t)_i|}{Lo}}$$ where:

  ▪ R is the rainfall rate in millimeters per hour
  ▪ Lo designates the distance crossed by the signal below the 0°C isotherm
  ▪ ∆P(t) designates the fluctuation of the received power in decibels
  ▪ b and k denote coefficients depending mainly on the frequency, on the polarization of the radiofrequency signal and on the size distribution of the drops.

8. Method for measuring precipitation according to claim 1, **characterized in that** said radio signal emitted from at least one transmitter further comprises the radio signal emitted by a satellite, preferably a geostationary Ku-, Ka- or V-band television satellite.

9. Method for measuring precipitation according to claim 1, **characterized in that** it further comprises processing steps carried out station by station, comprising:

  ○ identification of the periods of precipitation and of the reference level (step 50) from the power P(t) measured by the relevant measurement station (step 100)
  ○ determination (step 60) of the physical relationship between the rain and the power fluctuation due to the rain (step 110) calculated from the power measured during step (100),
  ○ determination of the size of the drops (step 200) from multi-polarization/frequency measurements,

    - use of the size of the drops determined in step (200) and the relationship between the size and the speed of the drops (step 70) to supplement the results of step (110) of measuring the power fluctuation due to the rain to determine the rainfall rates (step 120),
    - use of the relationship between the size and the speed of the drops (step 70) in order to estimate the speed of the fall of the drops (step 170) to produce a projection on the ground of the rainfall (step 130) according to the result of step (120),

    ◦ calculation of delays, processing of images, merging of data (step 80) from the result of the power measurement of step (100) and from the wind model at altitude (step 150) as well as from satellite images (step 160) in order to determine the speed of movement of the rain cells (step 190)

    ◦ spatialization (step 90) in order to determine a map of rain on the ground (step 140).

10. Method for measuring precipitation according to claim 1, **characterized in that** it comprises a step of filtering said combination of the measurements taken by a plurality of stations by detecting the simultaneous variations in the power of the emissions detected on the different stations involved.

11. Method for producing a precipitation map, consisting in determining, for a plurality of acquisition devices $STATION_i$, the average precipitation rates R(t) provided by the method according to claim 7, and then carrying out a mapping step consisting in carrying out a projection on the ground of said rain rates $R(t)_i$ on the basis of the altitude Zo of the 0°C isotherm.

12. Method for producing a precipitation map according to the preceding claim, **characterized in that** said processing is carried out for each acquisition device $STATION_i$ and **in that** the projections on the ground of the rain rate Rx,y,z(t) are determined on the basis of:

    - said received power fluctuation value $(\Delta P(t),t)_i$ corresponding to said devices $STATION_i$,
    - the length $Lo_i(t)$ of the segment of the $STATION_i$ - transmitter $E_i$ link between the ground and the altitude Zo(t) of the 0°C isotherm.

13. Method for producing a precipitation map according to the preceding claim, **characterized in that** said step of determining the projections on the ground of the rain rate $R_{x,y,z}(t)$ is also based on the time and the direction of fall of the drops in the volume comprising the positions of said devices.

14. Method for producing a precipitation map according to claim 11, **characterized in that** said step of acquiring at least one radio signal transmitted from at least one radiofrequency transmitter and the periodic measurement of the power of said signal is carried out by an acquisition device $STATION_i$ consisting of a module having an input for receiving the signal coming from a radio-frequency reception antenna, a component which selects part of the useful signal by potentially transposing it to a lower frequency band, an electronic circuit for measuring the level of the input signal and the calculation of a digital value representative of said level, and means of communication for the remote distribution of a digital message comprising said digital value and optional local parameters such as the identifier $ID_i$ of said acquisition device $STATION_i$.

15. Method for producing a precipitation map according to claim 11, **characterized in that** a computer equipping a server controls the processing operations consisting in:

    - estimating the speed of movement of the rain cells (step 180) by a direct estimation from the time data $AP(t)_i$ of fluctuations of the received power calculated from the data $P(t)_i$ measured by the various measuring stations $PA_i$ geolocated in $(x,y,z)_i$ and recorded by the various sensors,
    - calculating a projection on the ground of the rainfall measurements taken by each measuring station $PA_i$, taking into account the position of the sensor, the altitude Zo of the 0° isotherm, the speed of fall of the raindrops, and the speed of movement of the precipitation cells,
    - periodically carrying out, at a frequency of 1/Tf, a reconstruction of the map of rain on the ground by a step of merging the measurements taken by a significant number of measuring stations $STATION_i$, over a period [t-T:t] (where T>Tf), to produce a map of the rain on the ground over the area around the sensors over the period [t-Tf:t].

16. Method for producing a precipitation map according to the preceding claim, **characterized in that** said estimation of the speed of movement of the rain cells:

    - consists in estimating, for each pair of measurement stations $(STATION_i; STATION_j)$, the delay/"lag" between the dates of the start of precipitation on each of the sensors, then in deducing by triangulation the movement of the rain cells from the delays for all pairs of measuring stations,
    - is produced from satellite images of cloud masses,
    - consists in modeling the wind at altitude by meteorological models,
    - or finally consists in merging at least 2 of the previous methods.

17. Method for producing a precipitation map according to claim 15, **characterized in that** said step of merging the measurements taken by a significant number of measurement stations $STATION_i$ is carried out by data assimilation processing based on a representative model of the state of the atmosphere A(t).

18. Method for producing a precipitation map according to claim 15, **characterized in that** said step of merging the measurements carried out by data assimilation processing merges data of different natures originating from different types of instruments, it being possible in particular for these instruments to be a significant number of measuring stations STATION$_i$, weather radars, rain gauges or disdrometers.

19. Acquisition device for implementing the method according to claim 1, **characterized in that** it comprises an input for receiving the signal coming from a radio-frequency reception antenna, an electronic circuit for measuring the level of the input signal and the calculation of a digital value representative of said level, and means of communication for the remote distribution of a digital message comprising at least one of the following elements:

   - said digital image value of the power
   - an identifier ID$_i$ of said acquisition device STATION$_i$
   - the instantaneous position of the STATION$_i$
   - information on the measured signal components
   - information on the transmitter(s) listened to
   - information relating to local weather conditions
   - information relating to the results of calculations carried out locally, etc.

20. Acquisition device according to the preceding claim, **characterized in that** said radiofrequency reception antenna consists of a satellite dish (1) equipped with a universal head (2) of the LNB type.

21. Acquisition device according to the preceding claim, **characterized in that** it further comprises:

   - a photovoltaic system (14) consisting of a solar panel, a battery and an electronic controller,
   - a radio-frequency means of communication.

22. Acquisition device according to the preceding claim, **characterized in that** it comprises a circuit for placing said radio-frequency communication means on standby, which circuit is controlled by a signal representative of the presence of precipitation in the sight of said device, by information coming from the network or by the state of the station in the short/medium term, depending on the amount of energy present in the battery as well as the expected availability of the energy source.

23. Acquisition device according to claim 20, **characterized in that** it comprises a means for periodically switching off the LNB head (2).

24. Acquisition device according to the preceding claim, **characterized in that** it comprises means for adjusting the periodicity of the extinction of the LNB head (2) on the basis of a signal representative of the presence of precipitation in the sight of said device, on the basis of information from the network or on the basis of the state of the station in the short/medium term.

25. Acquisition device according to claim 20, **characterized in that** it comprises means for controlling the periodic variation of the polarization and/or of the frequency band of the LNB head (2), for the measurement of the various components of the received signal.

26. Acquisition device according to claim 20, **characterized in that** it comprises a means (12) for thermal protection of the LNB head (2) and the batteries of the power supply (3).

27. Acquisition device according to claim 19, **characterized in that** it comprises at least one sensor (11) which supplies the computer with local parameters with the aim of eliminating the undesired contributions in the measurement of the signal.

Figure 1

Figure 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BARTHÈS, L. ; MALLET, C.** Rainfall measurement from the opportunistic use of an Earth-space link in the Ku band. *Atmos. Meas. Tech.,* 2013, vol. 6, 2181-2193, https://doi.org/10.5194/amt-6-2181-2013
- Estimation of Finescale Rainfall Fields Using Broadcast TV Satellite Links and a 4DVAR Assimilation Method. **FRANÇOIS MERCIER ; LAURENT BARTHÈS ; CÉCILE MALLET.** Journal of Atmospheric and Oceanic Technology. American Meteorological Society, 2015, vol. 32, 1709-1728
- **FRANÇOIS MERCIER ; RUBEN HALLALI ; DUMINDA RATNAYAKE ; LAURENT BARTHES ; CÉCILE MALLET.** HD Rain. *Radars: Technologies, Méthodologies et Applications (R-TMA-2018)*